Europäisches Patentamt

European Patent Office

Office européen des brevets

(11) Publication number: **0 654 547 A1**

## EUROPEAN PATENT APPLICATION

(21) Application number: **94308611.6**

(22) Date of filing: **22.11.94**

(51) Int. Cl.6: **C25C 1/00**, C22B 3/00

(30) Priority: **22.11.93 CL 144693**

(43) Date of publication of application:
**24.05.95 Bulletin 95/21**

(84) Designated Contracting States:
**DE ES FR GB GR IE IT NL PT SE**

(71) Applicant: **Sociedad de Desarrollo Minero Limitada "SODEMI LTDA"**
**Benjamin 2926-A,**
**Las Condes**
**Santiago (CL)**

(72) Inventor: **Tschischow, Nikolaus**
**c/o "Sodemi Ltda"**
**Benjamin 2926-A,**
**Las Condes,**
**Santiago (CL)**
Inventor: **Sepulveda, Hector**
**c/o "Sodemi Ltda"**
**Benjamin 2926-A,**
**Las Condes,**
**Santiago (CL)**

(74) Representative: **West, Alan Harry et al**
**R.G.C. Jenkins & Co.**
**26 Caxton Street**
**London SW1H 0RJ (GB)**

(54) **Electrochemical refining of metals.**

(57) The anodic dissolution of minerals in cells equipped with ion-exchange membranes is carried out at a potential that allows for the dissolution and/or regeneration of the metal salts present in the anolyte and simultaneously the electrodeposition of the metals in the catholyte. The process offers a lower-cost alternative to traditional processes, avoids negative environmental impact and allows for the recovery of economically valuable by-products.

EP 0 654 547 A1

This invention relates to the electrochemical refining of metals, and more especially to an electrochemical process that is economically viable and environmentally acceptable.

Traditional processes for obtaining metals are based on pyro-, hydro- and electrometallurgical techniques. Although there have been enormous technological advances in these processes, such advances have not solved the main problems of the metal refining industry, that is to say the high operating costs, high capital investment costs, the polluting nature of the processes and the decreasing quality of ore deposits.

The future economic health of the industry is therefore likely to be closely connected to the following factors:
- relative size of investments;
- operating costs;
- ability to comply with environmental standards;
- final quality of the refined metal.

The main cause for the high cost of these refining processes is the need for continuous replacement of the inventory of leaching agents, the high energy use and the requirement for additional investment to treat effluents.

This invention seeks to address the abovementioned problems by using electrochemical cells provided with ion-exchange membranes and relying upon potentials which allow for the configuration of a cyclic process in terms of reagent inventory, thus reducing operating costs for energy consumption, manpower and membrane replacement. It is based upon the appreciation that the differences of potential applied in anodic polarisation may be such that they permit the dissolution of minerals and/or concentrates, and/or the regeneration of the leaching reagent, and takes advantage of these properties to achieve low energy consumption during dissolution and electrowinning and to recycle the leaching reagents.

In accordance with the present invention, there is now provided a process for the electrochemical dissolution of a sulfur-containing and/or concentrated ore containing at least one metal to be recovered, in at least one electrolytic cell provided with an ion-exchange membrane and with anodic and cathodic compartments across which a potential difference is applied, the process comprising the steps of:

(a) dissolving the ore in a leaching electrolyte and recovering the metal by electrodeposition;

(b) effecting anodic dissolution of a sulfur-containing and/or concentrated ore and recovering the metal in the same or in another electrolytic cell with a difference of controlled potential; and

(c) regenerating the leaching electrolyte in the anodic compartment of the cell or at least one other cell, and recycling the regenerated leaching electrolyte so that its quantity remains substantially constant.

The invention achieves low energy use in the stages of dissolution and electrowinning and in recycling the leaching reagents, and thus represents a significant advantage in the leaching and recovery of metals.

The invention is described below in greater detail by way of example only with reference to the accompanying drawings, in which

Fig. 1 shows a system for the leaching and recovery of the metal, starting with a polymetallic concentrate;

Fig. 2 shows a system with an insoluble anode for use with one or two metals; and

Fig. 3 shows a system for use in the recovery of a metal, starting with anodic dissolution of the ore.

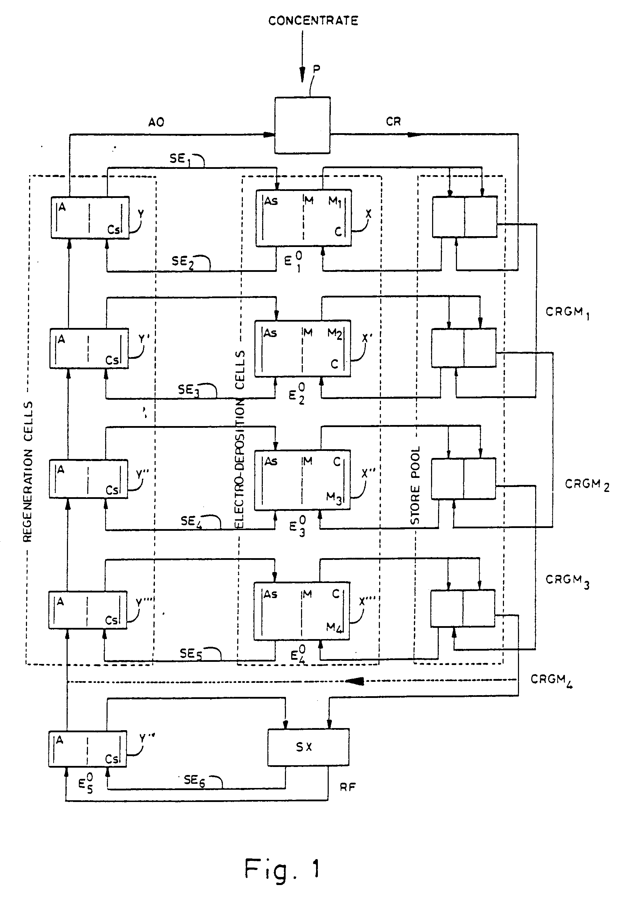

Referring first to Fig. 1 of the drawings, there is shown a system for leaching, dissolving and recovering from an ore four metals $M_1$, $M_2$, $M_3$ and $M_4$, although it will be understood that the system can be adapted to as few or as many metals as may be required to be recovered.

As shown in the drawing, the ore or the polymetallic concentrate derived from it is first leached in a lixiviation unit (P), the product of which, the so-called reduced catholyte (CR) containing the metal to be recovered is passed to a first storage pool. From the storage pool, the reduced catholyte then passes to the cathode compartment of a first deposition cell (X). The cathode compartment is separated from the anode compartment in the cell (X) by a membrane (M). A potential $E_1^O$ is applied across the cell between the anode (As) and the cathode (C) to permit electrodeposition of the first metal $M_1$ on the cathode (C).

The reduced catholyte ($CRGM_1$) depleted in metal $M_1$ is returned to the storage pool and then fed to a second storage pool feeding a second deposition cell $X_1$ containing an anode (As), a cathode (C) and a membrane (M), and across which there is supplied a potential $E_2^O$ to permit electrodeposition of a second metal $M_2$. These steps are repeated as necessary to recover metals $M_3$ and $M_4$.

The analyte $SE_2$, $SE_3$, $SE_4$ and $SE_5$ from the anode compartments of each of the electrodeposition cells (X, $X^I$, $X^{II}$ and $X^{III}$) containing dissolved anode material, is fed to its own regeneration cell (Y, $Y^I$, $Y^{II}$ and $Y^{III}$) where the anode material (As) is electrodeposited, and then recycled to the electrodeposition cells (X, $X^I$, $X^{II}$ and $X^{III}$).

The catholyte ($CRGM_4$) exiting the last of the four electrodeposition cells may be passed into one or more solvent extractions units (Sx) when the reduction potential of any components of the reduced leaching electrolyte is greater than that of any remaining metal. The resulting metal rich solution is fed as catholyte $SE_6$ to a cell ($Y^{IV}$) where that metal is electrodeposited under a potential $E_5^O$, and the raffinate (RF) is fed to the anolyte of that cell of the regeneration cells ($Y^{III}$, $Y^{II}$, $Y^I$ and Y) which it leaves as the leaching electrolyte (AO) fed to the lixiviation unit (P).

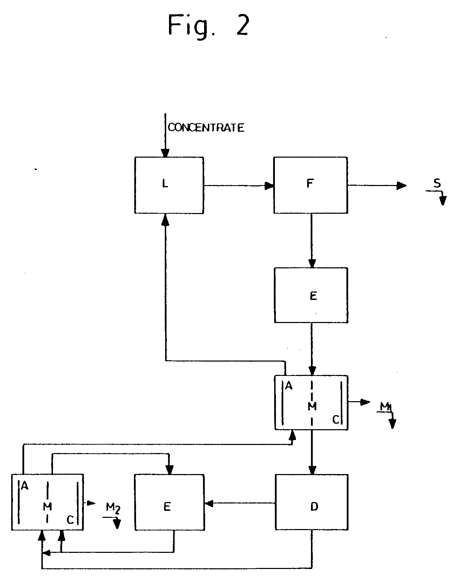

As an alternative, for concentrates that contain one or two metals, it is possible to use a deposit cell that contains an insoluble anode (A) as shown in Fig. 2. Briefly, the system of Fig. 2 involves lixviation (L) of the concentrate followed by filtration (F) and removal of residue (S) and after optional intermediate storage (E) passage to the membrane cell. In both systems, the oxidised anolyte (AO) is recovered by regenerating the leaching electrolyte.

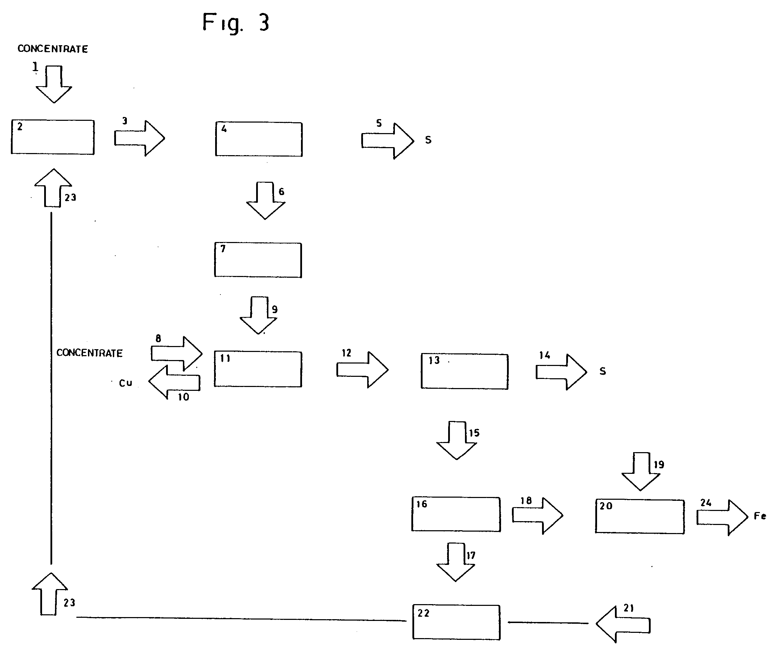

The more specific example which follows, described by reference to Fig. 3, concerns copper sulfides or concentrates, but is equally applicable to the recovery of other metals.

Copper sulfide or concentrate 1, 8 is fed into the anolyte in a cell 2, 11, where anodic dissolution occurs in the presence of $CuCl_2$, $FeCl_2$ and/or $FeCl_3$, 23. The emerging stream 3 is filtered 4, leaving a solid residue 5, which contains the elemental sulfur produced by the oxidation of the sulfide, and an acid liquid stream 6, which contains the chlorides of the metals present in the ore.

Copper will be the principal metal leached out in this example, along with numerous others such as lead, zinc, precious metals, antimony, arsenic and molybdenum.

The liquid stream 6 is deposited in a solution storage pool 7, from which it is fed 9 into the cell 11 in the catholyte and with the copper sulfide and/or concentrate 8 in the anolyte; in the catholyte of this cell there is obtained Cu 10, and the discharged catholyte feeds the anolyte of this cell 11, which helps in the dissolution of the Cu sulfide and/or concentrate 8. The emerging stream 12 is filtered 13, leaving a solid residue 14 containing the elemental sulfur produced by the oxidation of the sulfide, and an acid liquid stream 15 containing the chlorides of the metals present in the ore.

The steam 15 is cooled 16 to crystallise $FeCl_2 \cdot 2H_2O$, 18, and a stream 17 of acid liquid which feeds a solution storage pool 22, which is fed 23 into the anolyte of the cell 2.

The $FeCl_2 \cdot 2H_2O$, 18 is dissolved with $H_2O$ 19 to feed the catholyte of the cell 20, where Fe is produced in powder form 24, and the spent catholyte 21 of the cell 20 is used to adjust the acidity of the electrolyte 23, thus completing the cycle of the leaching agents.

The anodic dissolution cell 2 was charged with an electrolyte containing 68.6 g/ℓ of $Cu^{+2}$ as $CuCl_2$, 204 g/ℓ of $FeCl_2$, 150 g/ℓ of NaCl and 6 g/ℓ of HCl in the anode compartment. The cathode compartment was charged with an electrolyte made up of sulfuric acid at a concentration of 130 g/ℓ.

Two anode dissolution and electrowinning cells 11 were charged with an electrolyte containing 62 g/ℓ, of $Cu^{+2}$ as $CuCl_2$, 204 g/ℓ of $FeCl_2$, 150 g/ℓ of NaCl and 5.4 g/ℓ of HCl in the anode compartments. The cathode compartments were fed with the same electrolyte as the dissolution cell.

The fourth cell 20 was charged as follows: in the cathode compartment with an electrolyte saturated with ferrous chloride; in the anode compartment with an acid electrolyte of sulfuric acid with a concentration of 80 g/ℓ.

The flow of electrolyte was 90 mℓ/min.

The four cells were energised as follows: in the dissolution cell 2, a voltage of 1.4 V was applied, and the current intensity was 23 A; in each dissolution and electrowinning cell 11, a potential difference of 0.7 V and a current intensity of 12 A was applied; in the acid regeneration and iron deposit cell 20, a potential difference of 2 V and a current intensity of 35 A was applied.

A quantity of 47 g of $CuFeS_2$ concentrate with 29% copper was added to the anode compartment of the dissolution cell 2 at a rate of 0.78 g/min.

In a similar manner, 24.3 g of $CuFeS_2$ concentrate was added to the dissolution and electrowinning cells 11 in their anode compartments at a rate of 0.4 g/min in each.

After one hour, the cathodes were weighed; they contained 27.6 g of deposited Cu, which indicates a copper extraction efficiency of 99.6%. The residual material contained sulfur, pyrite, 0.32% copper and silica.

Energy consumption for the dissolution and electrowinning was 1.7 kW/h/kg of copper.

**Claims**

1. A process for the electrochemical dissolution of a sulfur-containing and/or concentrated ore containing at least one metal to be recovered, in at least one electrolytic cell provided with an ion-exchange membrane and with anodic and cathodic compartments across which a potential difference is applied, the process comprising the steps of:

   (a) dissolving the ore in a leaching electrolyte and recovering the metal by electrodeposition;

   (b) effecting anodic dissolution of a sulfur-containing and/or concentrated ore in an electrolytic cell with a difference of controlled potential; and

   (c) regenerating the leaching electrolyte in the anodic compartment of the cell or at least one other cell, and recycling the regenerated leaching electrolyte so that its quantity remains substantially constant.

2. A process according to claim 1, wherein the potential difference applied to the cell is selected to achieve anodic dissolution of the ore fed into the anodic compartment of the cell and to oxidise the leaching electrolyte that is reduced *in situ*.

3. A process according to claim 1 or claim 2, wherein the leaching electrolyte has a physicochemical composition that remains substantially constant.

4. A process according to claim 3, wherein the composition of the leaching electrolyte is selected to be of such an oxidation state such that the standard electrode reduction potential of the leaching electrolyte is greater than or equal to the standard electrode potential of the ore to be dissociated.

5. A process according to any one of claims 1 to 4, wherein the leaching electrolyte is regenerated and enriched in the anodic compartment of the cell and fed into the cathodic compartment of the cell, where the metal is recovered.

6. A process according to any one of claims 1 to 5, wherein the metal ore is dissociated in a leaching pool, feeding the cathodic compartment of the cell, the metal being recovered and leaching electrolyte regenerated in the anodic compartment of at least one other cell different from electrodeposition cell or the soluble anode of the electrodeposition cell and the soluble cathode of the regeneration cell together forming a single entity.

7. A process according to any one of claims 1 to 6, wherein the leaching electrolyte is subjected to solvent extraction to remove any component having a reduction potential greater than that of the metal to be recovered.

8. A process according to any one of claims 1 to 7, wherein the minimum pH of the leaching electrolyte is such that the active functional group of each ion-exchange membrane remains dissociated.

9. A process according to any one of claims 1 to 8, wherein the metal to be recovered is electrodeposited onto a metal sheet acting as a cathode.

10. A process according to any one of claims 1 to 8, wherein the metal to be recovered is precipitated as a powder.

11. A process according to any one of claims 1 to 10, wherein the number of electrolytic cells corresponds to the number of metals to be recovered, each cell including a soluble anode and operating under a potential difference determined as a function of the anode/catholyte redox to be sufficient to dissolve the soluble anode and cause deposition of the metal to be recovered in the cathodic compartment of the cell with a very low impurity content.

12. A process according to claim 11, wherein the electrolyte in the anodic compartment of each electrodeposition cells has a physicochemical composition independent of that of the leaching electrolyte fed into the anodic compartment.

13. A process according to claim 11 or claim 12, wherein the metal of the solubilised anode of each cell is deposited on a metal sheet acting as cathode in a separate leaching electrolyte regenerating cell.

14. A process according to any one of claims 1 to 13, wherein each electrolytic cell uses an electrolyte and cathode and anode plates of the types conventional in electrorefining.

Fig. 1

Fig. 2

# Fig. 3

CONCENTRATE

1

2

3

4

5 → S

6

7

9

8

CONCENTRATE

Cu

10

11

12

13

14 → S

15

19

16

18

20

24 → Fe

17

22

21

23

23

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 159 232 (W. G. BACON) 26 June 1979<br>* column 5, line 15 - line 19 *<br>* column 5, line 63 - column 7, line 68 *<br>* figure 2 *<br>--- | 1-3,5,9,<br>10,14 | C25C1/00<br>C22B3/00 |
| A | EP-A-0 061 392 (CENTRE NATIONAL DE LA RECHERCHE SCIENTIFIQUE) 29 September 1982<br>* page 15, line 21 - page 16, line 23 *<br>* figure 1 *<br>* page 23 - page 24; claim 8 *<br>--- | 1,5 | |
| A | DE-A-31 10 320 (NATIONAL RESEARCH DEVELOPMENT CORP.) 7 January 1982<br>* page 6, line 14 - line 20 *<br>* page 7 - page 8; example 1 *<br>--- | 1 | |
| A | US-A-5 169 503 (D.R. BAUGHMAN) 8 December 1992<br>* column 5, line 52 - line 64 *<br>* column 6 - column 8; claims 1-28 *<br>----- | 1 | |
| | | | TECHNICAL FIELDS SEARCHED (Int.Cl.6)<br><br>C25C<br>C22B |

The present search report has been drawn up for all claims

| Place of search | Date of completion of the search | Examiner |
|---|---|---|
| THE HAGUE | 22 February 1995 | Groseiller, P |

EPO FORM 1503 03.82 (P04C01)